# EUROPÄISCHE PATENTANMELDUNG

(11) **EP 1 988 317 A2**
(43) Veröffentlichungstag der Anmeldung: **05.11.2008**
(21) Anmeldenummer: 08007014.7
(22) Anmeldetag: 09.04.2008
(51) Int. Cl.: F16L 3/22, F16L 3/24, F16L 29/04

(54) **Modul für modulare Fluidkupplungen**

(30) Priorität: 04.05.2007 DE 102007021514
(71) Anmelder: TEMA Marketing AG, 6300 Zug (CH)
(72) Erfinder: Buck, Steffen, 71642 Ludwigsburg (DE)
(74) Vertreter: Rüger, Barthelt & Abel Patentanwälte

(57) **Zusammenfassung**

Ein Modul (1) für den modularen Aufbau von Kupplungshälften (2) von Mehrfachfluidverbindungen weist einen Grundkörper (3) auf, der wenigstens zwei Aufnahmebohrungen (14,15) für Buchsen- oder Steckerteile enthält. An den Seitenflächen (6,7), die bei modularem Aufbau aneinander zu liegen kommen, sind Nuten (25) bzw. Passfedern (20) ausgebildet, die beim Anreihen miteinander in Eingriff kommen und für eine lagerichtige Positionierung sorgen. Befestigungsmittel (31,47,50) halten die Module (1) aneinander.

## Beschreibung

Wenn es darum geht in einem Werkzeug oder einer Maschine Werkzeug- oder Maschinenteile flexibel an die Grundeinheit anzukuppeln, werden Mehrfachfluidkupplungen verwendet, soweit diese Zusatzteile hydraulisch betätigt werden. Die Mehrfachfluidkupplung besteht aus einem Grundkörper mit angenähert quaderförmiger Gestalt, in dessen Rückseite die Schlauchleitungen einmünden oder von der sie wegführen. Im Inneren des Grundkörpers sind die bei Fluidkupplungen'üblichen Ventile und Dichtungseinrichtungen vorhanden, damit möglichst leckarm das Trennen erfolgt. Andererseits soll möglichst wenig Luft in das System kommen, wenn die Kupplungen miteinander verbunden werden.

Bei den derzeitigen auf dem Markt befindlichen Fluidkupplungen wird ein unterschiedlicher großer Grundkörper verwendet, der der Anzahl der Fluidverbindungen Rechnung trägt. So gibt es Grundkörper für 2, für 4, für 6 oder für 8 Fluidverbindungen. Diese Art von Grundkörper zeigt hinsichtlich der Anwendung für den Anwender und auch für den Hersteller relativ wenig Flexibilität.

Der Hersteller braucht Fertigungseinrichtungen für die unterschiedlichen Größen von Fluidkupplungen und auch eine entsprechende Lagerhaltung.

Auf der Seite des Anwenders besteht die Einschränkung in der mangelnden Möglichkeit weitere Fluidverbindungen gegebenenfalls nachrüsten zu können, ohne den gesamten Block auswechseln zu müssen.

Ausgehend hiervon ist es Aufgabe der Erfindung ein Modul zum Aufbau einer modularen Fluidkupplung zu schaffen.

Diese Aufgabe wird erfindungsgemäß mit einem Modul mit den Merkmalen des Anspruches 1 gelöst.

Das erfindungsgemäße Modul dient dazu, modulare Fluidkupplungen aufzubauen, bei denen zwei Kupplungshälften miteinander kuppelbar sind. Das Modul weist eine Grundplatte bzw. einen Grundkörper auf, der zwei zueinander parallele Seitenflächen eine Rückseite und eine Vorderseite aufweist. Die Vorderseite liegt im gekuppelten Zustand der anderen Kupplungshälfte gegenüber.

Die Seitenflächen sind zueinander spiegelbildlich in dem Sinne, dass eine Seitenfläche eine Nut und die andere eine Passfeder enthält. Wenn zwei Module mit ihren Seitenflächen aneinander liegen, greift die Passfeder des einen Moduls in die Nut des anderen Moduls ein.

Die Längsachse der Nut bzw. der Passfeder kann rechtwinklig zu einer Ebene verlaufen, die durch die Vorderseite definiert ist. Eine andere Möglichkeit besteht darin die Nut bzw. Passfeder parallel zu dieser Fläche auszurichten.

Die Grundplatte bzw. der Grundkörper enthält zwei Aufnahmebohrungen, deren Achse auf der durch die Vorderseite definierte Ebene senkrecht steht. In diesen Aufnahmebohrungen werden beim fertigen Modul die einzelnen Stecker und Buchsenelemente eingebaut bzw. in diesen aufgebaut.

Ferner enthält das Modul eine Querbohrung, die durch die Grundplatte mittig zwischen den Aufnahmebohrungen hindurchführt und die einen Teil der Lagerung des Spannmittels bildet mit dem die Kupplungshälfte einer Fluidkupplung zusammengespannt werden.

Die Querbohrung kann auch einen Teil eines Verbindungsmittels darstellen um zwei Module Seitenfläche an Seitenfläche miteinander zu verbinden.

Die Grundplatte bzw. der Grundköper besteht vorzugsweise aus einem Gussmaterial. Es kann sich hierbei um einen Abschnitt eines Aluminiumstranggussteils, einen Aluminiumdruckgussteil oder ein Edelstahlfeingussteil handeln.

Vorteilhafterweise kann die Vorderseite eine ebene Fläche sein.

Bei der Nut kann es sich um eine Nut handeln, die im Querschnitt rechteckig oder trapezförmig ist. Ihre Breitenerstreckung kann groß oder klein gegenüber der Seitenfläche sein. Mit anderen Worten, die Nut kann sich auf einen Höhenbereich beschränken, der durch parallele Ebenen begrenzt ist, die die Achsen der Aufnahmebohrungen enthalten, oder die Nut kann diesen Bereich übersteigen.

Die Nut kann zumindest angenähert zwischen den Aufnahmebohrungen zentriert liegen.

Die Seitenfläche kann sich in Richtung von der Vorderseite weg in einem Fortsatz verlängern. Dieser Fortsatz liegt vorteilhafterweise symmetrisch zur Nut bzw. zur Passfeder.

Zur weiteren Verbindung oder zur einzigen Verbindung der Module untereinander, kann in diesem Fortsatz eine Querbohrung enthalten sein, die der Aufnahme einer Verbindungsschraube dient, über die zwei Module Seite an Seite miteinander befestigt werden. Die dann in der Nut steckende Passfeder des jeweils anderen Moduls legt die relative Lage zwischen den beiden Modulen in Richtung senkrecht zu der Nut fest.

Die Passfeder kann einstückiger Bestandteil des Moduls sein oder getrennter Teil, was bedeutet, dass der Grundköper des Moduls zwei Nuten aufweist, die untereinander gleichen Querschnitt aufweisen und die auch entsprechend auf der gleichen Höhe liegen.

Die Fortsätze an den Seitenflächen können über einen Steg miteinander verbunden sein, wobei sich durch den Steg eine in dessen Längsrichtung verlaufende Bohrung erstreckt. Diese Bohrungen fluchten bei mehreren nebeneinander angeordneten Modulen, so dass mit einer durch alle Module hindurchführenden Schrauben die Module aneinander verbunden werden. Diese Bohrung kann vorteilhafterweise auf der Höhe der Querbohrung zur Lagerung des Spannmittels liegen.

Aus der Grundplatte können zur Rückseite hin angenähert runde Fortsätze vorstehen, durch die die als Durchgangsbohrung ausgeführten Aufnahmebohrungen hindurch laufen. Dadurch kann Material für die Grundplatte eingespart werden, deren Dicke kleiner sein kann als der Raum senkrecht zur Vorderseite, der zur Unterbringung der Stecker-, Buchsen- und Ventileinrichtungen erforderlich ist.

Gegenstand der Erfindung ist ferner eine Kupplungshälfte, die aus wenigstens zwei Modulen zusammengesetzt ist, die, wie oben erläutert, ausgeführt sind. Durch die der Vorderseite benachbarte Querbohrung führt eine Hülse hindurch, die als. Hohlschraube dient um die Module miteinander zu verbinden und die eine Bohrung zur Lagerung des Spannmittels enthält. Das Spannmittel weist eine Achse auf, an deren Enden Betätigungshaken drehfest angeordnet sind.

Ferner ist Gegenstand der Erfindung eine Kupplungshälfte aus wenigstens zwei Modulen, wie sie oben erläutert sind, wobei durch die Querbohrung eine Stange hindurch führt, deren über die Seitenflächen der außen liegenden Module überstehenden Enden als Widerlager für das Spannmittel dienen.

Die Zapfen können gehärtet sein. Außerdem können auf den Zapfen drehbare Buchsen oder Röllchen gelagert sein.

Im Übrigen sind Weiterbildungen der Erfindung Gegenstand von Unteransprüchen.

Die nachfolgende Figurenbeschreibung erläutert Aspekte zum Verständnis der Erfindung. Weitere nicht beschriebene Details kann der Fachmann in der gewohnten Weise den Zeichnungen entnehmen, die insoweit die Figurenbeschreibung ergänzen. Es ist klar, dass eine Reihe von Abwandlungen möglich sind.

Die nachfolgenden Zeichnungen sind nicht unbedingt maßstäblich. Zur Veranschaulichung von Details können möglicherweise bestimmte Bereiche übertrieben groß dargestellt sein. Darüber hinaus sind die Zeichnungen plakativ vereinfacht und enthalten nicht jedes bei der praktischen Ausführung gegebenfalls vorhandende Detail. Der Begriff "vorne" bezieht sich auf jene Seite des Moduls, die im gekuppelten Zustand der anderen Kupplungshälfte gegenüber liegt.
- Fig. 1: zeigt in einer perspektivischen Darstellung ein Modul mit Blick auf die Rückseite.
- Fig. 2: zeigt das Modul nach Fig. 1 mit Blick von der anderen Seite her.
- Fig. 3: veranschaulicht in einem vereinfachten Schnitt zwei miteinander verbundene Module.
- Fig. 4: stellt in einer perspektivischen Schnittdarstellung zwei Module dar, die als Kupplungshälften miteinander gekuppelt werden.
- Fig. 5: stellt die Spanneinrichtung dar, die dazu dient, zwei Kupplungshälften miteinander zu kuppeln.

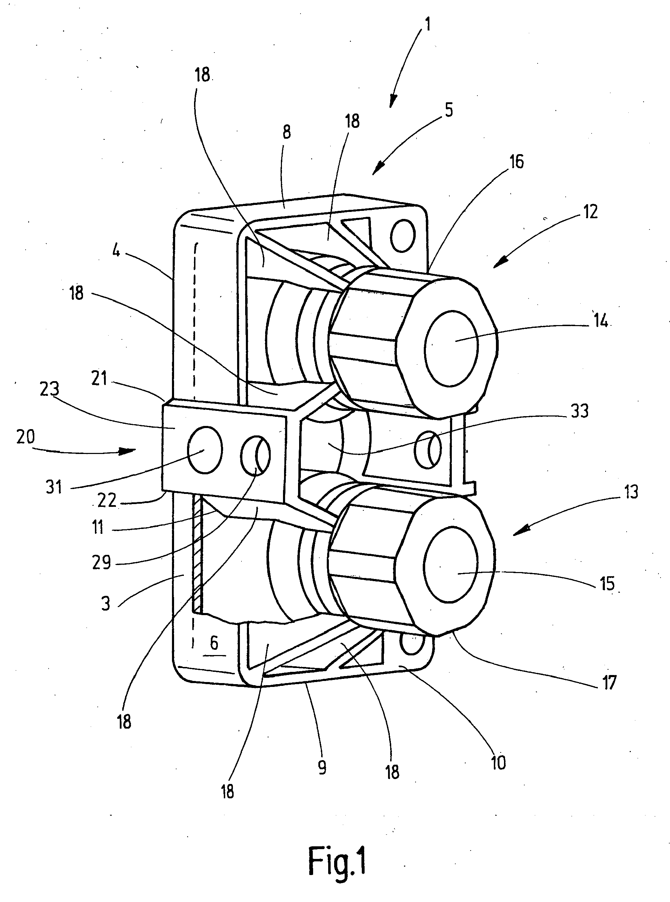

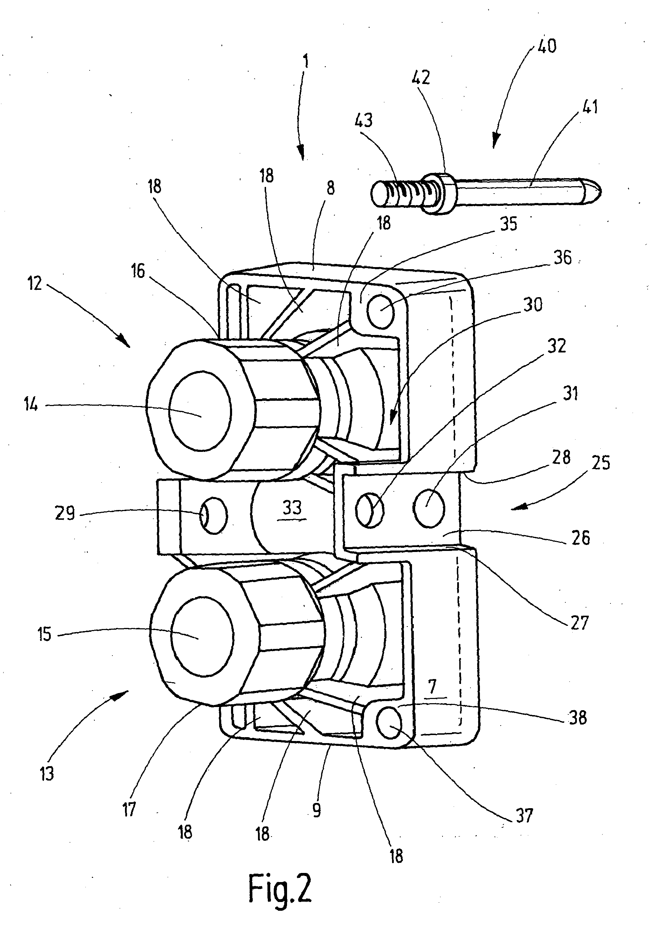

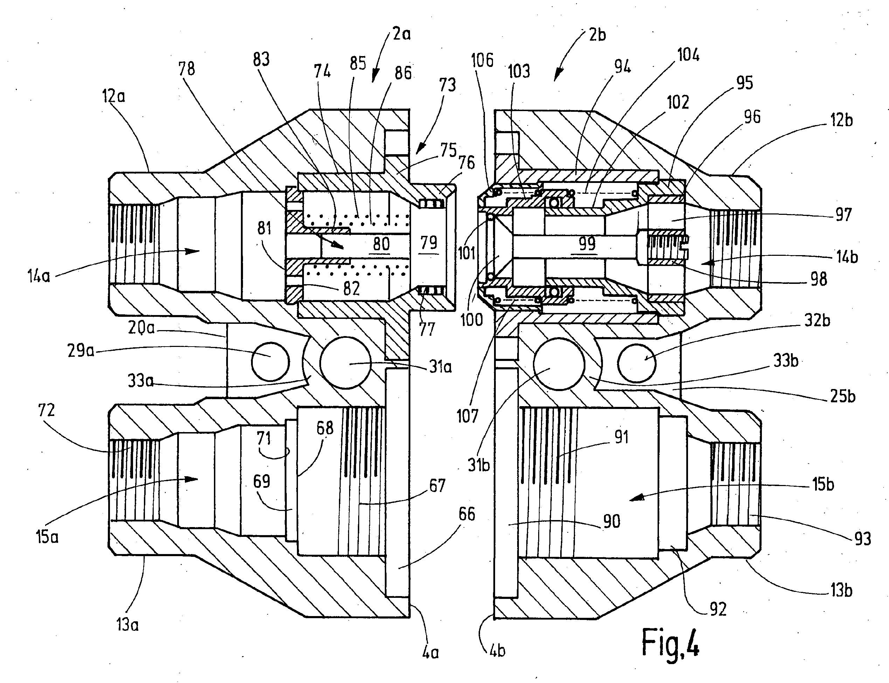

Die Fig. 1 und 2 veranschaulichen ein Modul 1, das dazu dient entweder alleine oder zusammen mit weiteren identischen Modulen eine Kupplungshälfte für eine Mehrfachfluidkupplung aufzubauen, wie sie in Fig. 4 im vereinfachten Schnitt gezeigt sind.

Fig. 1 zeigt das Modul 1 in einem Blick auf die Rückseite unter Veranschaulichung der linken Seite, während Fig. 2 das Modul ebenfalls mit Blick auf die Rückseite unter Veranschaulichung der rechten Seite erkennen lässt.

Zu dem Modul 1 gehört eine Grundplatte 3 mit einer ebenen Vorderseite 4 und einer einstückig angeformten Randanordnung 5, die die Grundplatte 3 allseitig umgibt. Die von der Grundplatte 3 definierte Fläche bzw. Vorderseite 4 ist eben rechteckig, so dass die Wandanordnung 5 zwei zueinander parallele lange Schmalseitenflächen 6 und 7 sowie zwei ebenfalls zueinander parallele kurze Schmalseitenflächen 8 und 9 bildet. Sämtliche Schmalseitenflächen 6...9 enden an einem Rand 10, der mit gleichem Abstand gegenüber der Vorderseite 4 verläuft.

Damit entsteht ein etwa rechteckiger becherförmiger Grundkörper mit einer Boden- oder Rückfläche 11 an der Rückseite der Grundplatte 3. Aus der Boden- oder Rückfläche 11 stehen zwei Fortsätze 12 und 13 vor, die abschnittsweise zylindrisch sind und deren Längsachse auf der Vorderseite 4 senkrecht steht. In jedem Fortsatz 12, 13 ist eine koaxiale Stufenbohrung 14, 15 enthalten, die, wie anhand von Fig. 4 weiter unten erläutert wird, abschnittsweise Innengewinde enthält. An seinem von der Grundplatte 3 abliegenden Ende ist der Fortsatz 12 mit einem Sechskantschlüsselansatz 16 versehen, während der Fortsatz 13 einen Sechskantschlüsselansatz 17 trägt. Jeder der beiden Fortsätze 12, 13 ist durch mehrere plattenförmige Strebpfeiler 18 seitlich abgestützt. Die Strebpfeiler 18 gehen einstückig in den Fortsatz 12 bzw. 13 und die Rückseitenfläche 11 über.

Die Lage der Fortsätze 12, 13 auf der Grundplatte 3 ist so gewählt, dass der lichte Raum zwischen den Fortsätzen 12, 13 an jener Stelle, an der sie den größten Durchmesser aufweisen, etwas größer ist als der Abstand von den kurzen Schmalseitenflächen 8 und 9.

Aus der Schmalseitenfläche 6 erhebt sich eine erhabene Leiste 20, die auch über den Rand 10 in Richtung von der Vorderseite 4 weg übersteht. Im Übrigen ist die Leiste 20 mit der Vorderseite 4 bündig.

Die Leiste 20 wird von zwei zueinander parallelen Schmalseiten 21 und 22 sowie einer außen liegenden Flachseite 23 begrenzt. Sowohl die Schmalseiten 21, 22 als auch die Flachseite 23 sind ebene Flächen, die auf der durch die Vorderseite 4 definieren Ebene senkrecht stehen. Die Leiste 20 bildet, wie sich aus der weiter unten gegebenen Funktionsbeschreibung ergibt, eine Passfeder.

Ferner ist ersichtlich, dass die Leiste 20 einen Fortsatz der Schmalseitenfläche 6 darstellt, der, wie die Figur auch erkennen lässt, über Strebpfeiler 18 zu den beiden runden Fortsätzen 12 und 13 hin abgestützt ist.

Die andere Schmalseite 7 enthält auf der Höhe der Leiste 20 eine komplementäre Nut 25, die von einer Nutengrundfläche 26 sowie zwei Nutenseitenflächen 27 und 28 begrenzt ist. Wie die Darstellung erkennen lässt, ist die Nut 25 in einen weiteren Fortsatz 30 eingeformt, der bezogen auf die vertikale Position/Höhe mit dem durch die Leiste 20 gebildeten Fortsatz fluchtet und der sich ebenfalls über den Rand 10 erhebt, an dem die Schmalseitenflächen 6...9 enden.

Die Nutengrundfläche 26 sowie die Nutenseitenflächen 27 und 28 sind ebene Flächen, die auch der durch die Vorderseite 4 definierten Ebene senkrecht stehen. Der Abstand der beiden Nutenseitenflächen 27, 28 entspricht dem Abstand der beiden Schmalseitenflächen 21 und 22, während die Tiefe der Nut 25, gemessen als Abstand zwischen der Nutenbodenfläche 26 und der Schmalseitenfläche 7 gleich der Höhe ist, mit dem die Flachseite 23 über der Ebene liegt, die durch die Außenseite der Schmalseitenfläche 6 definiert ist.

In der Leiste 20 sind zwei Bohrungen 29 und 31 enthalten. Die Bohrung 29 fluchtet mit einer Bohrung 32 in der Nut 25, während die Bohrung 31 eine Durchgangsbohrung ist, die durch einen rippenförmigen Teil 33 bis zu der Nut 25 reicht. Der rippenförmige Teil 33 verläuft unterhalb des Rands 10 zwischen den beiden langen Schmalseitenflächen 6 und 7. Er ist mit der Grundplatte 3 einstückig.

Im Bereich der Innenecke, an der die Schmalseitenfläche 7 in die Schmalseitenfläche 8 übergeht, befindet sich ein Anguss 35 mit einer Durchgangsbohrung 36, deren Achse auf der Vorderseite 4 senkrecht steht. Eine ähnliche Bohrung 37 ist in einem Anguss 38 an der Innenecke zwischen der Schmalseitenfläche 9 und der Schmalseitenfläche 7 vorhanden. Diese Bohrungen 36 und 37 dienen der Aufnahme von Zentrierdornen 40.

Der Zentrierdorn 70 ist ein rotationssymmetrischer Körper und setzt sich aus einem Schaft 41, einem Bund 42 und einem Gewindeansatz 43 zusammen. Der Nenndurchmesser des Gewindes 43 entspricht dem Außendurchmesser des Schafts 41, so dass die Bohrungen 36 und 37 wahlweise zur Aufnahme und Befestigung des Gewindeabschnittes 43 als auch zur Aufnahme des Schaftes 41 dienen können. Zur Unterbringung des Bunds 42 sind die Bohrungen 36 und 37 von der Vorderseite 4 her entsprechend angesenkt.

Wie leicht zu versehen ist, können zwei oder mehr Module 1 nebeneinander zu einer Kupplungshälfte 2 zusammengesetzt werden.

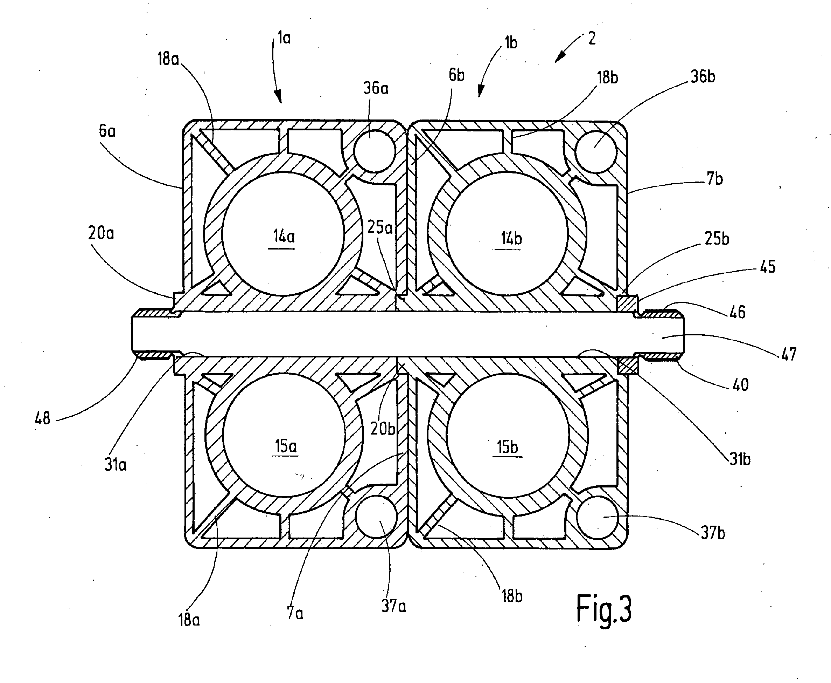

Fig. 3 zeigt eine Kupplungshälfte 2, bestehend aus insgesamt zwei Modulen 1a und 1b, die Seite an Seite miteinander verbunden sind. Fig. 3 zeigt die beiden Module 1a und 1b geschnitten auf der Höhe der Achse der Bohrung 32, in einer Blickrichtung entsprechend den Darstellungen in Fig. 1, d.h. von hinten.

Die an den beiden Modulen zu erkennenden Strukturelemente werden mit denselben Bezugszeichen versehen, wie in den Figuren 1 und 2, gegebenenfalls ergänzt durch die Buchstaben a und b.

In montiertem Zustand liegt die Schmalseitenfläche 7a gegen die Schmalseitenfläche 6b des Moduls 1b an. Dabei greift die als Passfeder dienende Leiste 20b in die Nut 25a ein. Auf diese Weise sind die beiden Module 1a und 1b in Richtung parallel zu der Vorderseitenfläche 4 und rechtwinklig zu den Bohrungen 33a und 33b gegeneinander positioniert und gleichzeitig auch verriegelt. Es wird somit sichergestellt, dass die Achsen der Bohrungen 14 und 15 in beiden Modulen 1a und 1b auf derselben Höhe liegen.

In die nach außen freie Nut 25b wird ein leistenförmiges Füllstück 45 eingesetzt, das eine Bohrung 46 sowie eine weitere weggeschnittene Bohrung enthält. Die Bohrung 46 fluchtet im montierten Zustand mit der Bohrung 31, während die weggeschnittene Bohrung mit den Bohrungen 29 und 32 fluchtet.

In der gleichen Weise fluchtet die Bohrung 32a mit der Bohrung 29b, so dass hier eine Befestigungsschraube durchgesteckt und mit einer Mutter gekontert werden kann, um die beiden Module 1a und 1b miteinander zu verschrauben. Die beiden Module 1a und 1b sind somit starr miteinander verbunden und können gemeinsam gehandhabt werden.

Um die so entstandene Kupplungshälfte 2 mit der anderen Kupplungshälfte zusammenspannen zu können, führt durch die miteinander fluchtenden Bohrungen 31a und 31b eine zylindrische Stange 47 hindurch, die an den überstehenden Enden drehbahre Röllchen 48 und 49 trägt. Nicht weiter erkennbare außen sitzende Sprengringe sichern die Anordnung in axialer Richtung. Die Stange 47 ist somit schwimmend in der Bohrung 31a bzw. 31b gelagert.

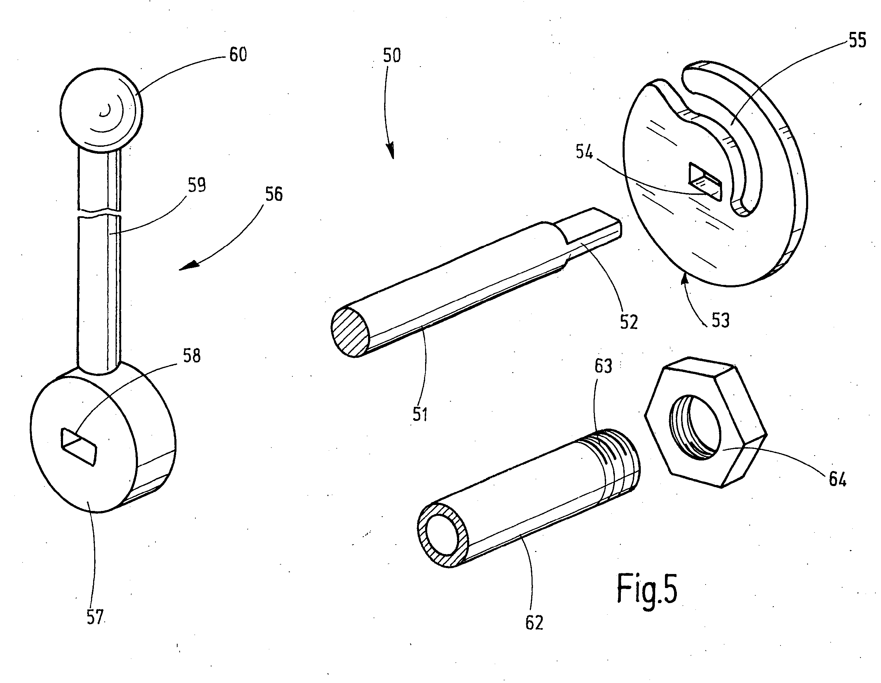

Für die gegenüberliegende Kupplungshälfte 2 ist ein Spannmittel 50 vorgesehen, wie es ausschnittsweise in Fig. 5 gezeigt ist. Zu dem Spannmittel 50 gehört eine Welle 51, die an beiden Enden mit Flachkanten 52 versehen ist. Wegen der abgeschnittenen Darstellung ist lediglich einer der beiden Flachkante 52 zu erkennen.

Auf jedem der beiden Flachkanten 52 sitzt drehfest eine Scheibe 53, die hierzu eine flachkantige Öffnung 54 enthält. Die flachkantige Öffnung 54 ist an den Querschnitt des Flachkants 52 angepasst.

In der Scheibe 53 ist eine sprialförmig verlaufender sackförmiger Schlitz 55 enthalten, dessen Schlitzweite an den Außendurchmesser der Röllchen 48 angepasst ist. Von der dargestellten Scheibe 53 sind zwei vorhandenen, von denen je eine auf einer Seite der Kupplungshälfte 2 angeordnet ist.

Lediglich auf einer Seite der beiden Kupplungshälften 2 sitzt noch ein Betätigungshebel 56 auf der Welle 51, zu dem eine Nabe 57 gehört, die eine flachkantige Öffnung 58 enthält. Mit der flachkantigen Öffnung 58 sitzt der Betätigungshebel 56 drehfest auf dem benachbarten Flachkant 52. der Achse oder Welle 51. Von der Nabe 57 geht eine Stange 59 aus, die am freien Ende einen Kugelkopf 60 trägt.

Im montierten Zustand führt die Achse oder Welle 51 durch die miteinander fluchtenden Bohrungen 31a und 31b der jeweils anderen Kupplungshälfte. Durch Drehen der beiden Scheiben 53 mit demr spiralförmig verlaufenden Schlitz 55 werden die beiden Kupplungshälften 2 gegeneinander gezogen und fest miteinander verbunden. Dabei dringen die Zentrierzapfen 40 in die gegenüberliegenden Bohrungen 36 bzw. 37 ein und führen die Kupplungshälften 2 beim Kupplungsvorgang in Richtung senkrecht zu der Vorderseite 4.

Bei einer geänderten Ausführungsform können die über den Rand 10 überstehenden Enden der Fortsätze 30 und 20 auf der Höhe der Bohrungen 29 bzw. 32 einstückig miteinander verbunden sein. Das bedeutet, dass die Rippe 33 bis zum freien Ende der Fortsätze 29 und 30 erhöht ist. Durch die so vergrößerte Rippe 33 führt eine Durchgangsbohrung entsprechend den Bohrungen 29, 30. Auf diese Weise kann eine durchgehende Schraube verwendet werden, die sämtliche zu einer Kupplungshälfte 2 gehörende Module 1 miteinander verbindet.

Gemäß einer weiteren Ausführungsform, wie sie ebenfalls andeutungsweise in Fig. 5 gezeigt ist, kann durch die miteinander fluchtenden Bohrungen 31 ein Rohr 62 hindurch führen, das beidends mit einem Gewinde 63 versehen ist. Mit Hilfe von auf beiden Enden aufgeschraubten Muttern 64 werden die Module 1 auf der Höhe der Bohrung 31 ebenfalls zusammengespannt. Die zuvor erwähnte Welle oder Achse 51 ist dann innerhalb des Rohrs 62 gelagert. Das Rohr 62 bildet somit ein Teil des Spannmittels als es eine Lagerbüchse für die Achse oder Welle 51 darstellt. Gleichzeitig ist das Rohr 62 auch Verbindungsmittel um die Module 1 aneinander zu befestigen. Das Verbindungs- oder Verankerungsrohr 62 kann zusätzlich zu der Verschraubung über die Bohrungen 29 bzw. 32 verwendet werden.

Fig. 4 zeigt im Längsschnitt zwei Module 1, die zu unterschiedlichen Kupplungshälften 2a und 2b gehören. Die Kupplungshälfte 2a bildet den Steckerteil und die Kupplungshälfte 2b den Buchsenteil. Der Längsschnitt liegt in einer Ebene, die die Achsen der Bohrungen 14 und 15 enthält.

Die in den Modulen 1a und 1b enthaltenen Bauelemente sind stark vereinfacht dargestellt. Insbesondere fehlt ein möglicherweise vorhandenes Vorsteuerventil, das dazu dient die Betätigungskraft etwas zu verringern.

Die Bohrungen 14 und 15a sind untereinander gleich. Sie sind als Stufenbohrungen ausgeführt und bilden zu der Vorderseite 4a hin einen ersten Abschnitt 66, an den sich ein Gewindeabschnitt 67 anschließt. Der Gewindeabschnitt 67 endet an einer Schulter 68, an der die Bohrung 15a in einen Abschnitt 69 mit verringertem Durchmesser übergeht. Hier ist eine Schulter 71 ausgebildet. Die Bohrung 15a geht schließlich über mehrere weitere Abschnitte in einen Gewindeabschnitt 72 am hinteren Ende über. Die dazwischen liegenden Abschnitte werden benötigt, falls Vorsteuerventile enthalten sind.

In dem Gewindeabschnitt 67 ist eine Steckerbüchse 73 mit innenliegenden Ventilsitz eingeschraubt. Die Steckerbüchse 73 weist einen rohrförmigen Schaft 74 sowie einen Bund 75 auf. Der Schaft 74 ist in den Abschnitt 67 eingeschraubt, während der Bund 67 an der Schulter anliegt, die den Abschnitt 66 mit dem Gewindeabschnitt 67 verbindet. Die Steckerbüchse 73 steht mit einem Steckerabschnitt 76 über die Vorderseite 4a über und enthält in dem überstehenden Teil in einer umlaufenden Ringnut zwei voneinander beabstandete O-Ringe 77. Die O-Ringe 77 arbeiten mit einem im Querschnitt T-förmigen Ventilverschlussglied 78 zusammen, das sich aus einem kolbenförmigen Abschnitt 79 mit großem Durchmesser und einem Schaft 80 zusammensetzt. Der kolbenförmige Abschnitt 79 dichtet mit Hilfe der O-Ringe 77 ab.

Auf der Schulter 71 sitzt ein Führungsstück 81 mit Durchlassbohrungen 82. Von dem tellerförmigen Führungsstück 81 geht ein rohrförmiger Führungsschaft 83 aus, der in Richtung auf die Vorderseite 4a zeigt. In der Bohrung des Schaftes 83 ist der Schaft 80 des Ventilverschlussstücks 78 axial geführt.

Mit Hilfe zweier koaxial ineinander steckender Schraubenfedern 85 und 86 ist das Ventilverschlussglied 78 in die Schließstellung vorgespannt, in der der Abschnitt 79 gegenüber den O-Ringen 77 abdichtet. Durch nicht weiter veranschaulichte Anschläge wird verhindert, dass die Druckfedern 85 und 86 das Ventilverschlussglied 78 nach vorne, d.h., bezogen auf die Darstellung in Fig. 4 nach rechts, aus der Steckerhülse 73 herausstoßen können.

Der Steckerteil 2b enthält eine Stufenbohrung 15b, die sich aus einem Abschnitt 90, einem Gewindeabschnitt 91, einem Abschnitt 92 und einem Gewindeabschnitt 93 zusammensetzt. Der Abschnitt 90 liegt zu der Vorderseite 4b hin, während der Gewindeabschnitt 93 an der Rückseite des Fortsatzes 13 ausgebildet ist.

In dem Gewindeabschnitt 91 sitzt ein Vorschraubhülse 94, mit deren Hilfe eine Führungsbüchse 95 und ein Stößelträger 96 gegen die Schulter festgeschraubt sind, an der der Abschnitt 92 zur Rückseite, d.h. bezogen auf Fig. 5 zum rechten Ende hin, endet. Der Stößelträger 96 enthält Durchlassbohrungen 97, die eine Gewindebohrung 98 umgeben, in der ein Stößel 99 eingeschraubt ist. Der Stößel 99 weist einen kegelförmigen Kopfteller 100 auf, der in seiner Kegelfläche eine umlaufende Nut für einen O-Ring 101 enthält.

Die Führungsbüchse 95 bildet einen den Schaft des Stößels 99 umgebenden rohrförmigen zylindrischen Kragen 102, dessen Außenfläche eine Dichtfläche ist, auf der eine als Hülse ausgebildetes Ventilverschlussglied 103 verschieblich ist. Das hülsenförmige Ventilverschlussglied 103 dichtet einerseits gegen den O-Ring 101 und andererseits gegen die Außenfläche 102 der Führungsbüchse 95.

Mittels einer Schraubendruckfeder 104 ist das hülsenförmige Ventilverschlussglied in die Schließstellung vorgespannt, in der es mit seiner kegelförmigen Dichtfläche an dem O-Ring 101 anliegt. Schließlich ist noch eine Füllhülse 106 vorhanden, die in dem Spalt zwischen dem Ventilverschlussglied 103 und der Bohrung der Vorschraubhülse 94 verschieblich ist. Eine Feder 107 spannt die Füllhülse 106 nach links vor. In dieser Stellung ist das freie, kegelstumpfförmig gestaltete Ende der Verschlusshülse 106 mit der Stirnfläche des Kopftellers 100 und der Stirnfläche des rohrförmigen Ventilverschlussglieds 103 bündig und erhebt sich ein stück über die Vorderseite 4b.

### Die Funktionsweise ist wie folgt:

Wenn der Benutzer durch Betätigung des Hebels 96 die beiden Scheiben 53 mit der Spiralnut 55 dreht, wird die andere Kupplungshälfte, aus der die Röllchen 48 vorstehen, herangezogen. Die Röllchen 48 laufen hierzu in dem spiralig sich erstreckenden Schlitz 55 der jeweiligen Scheibe 53 und werden, da sich der radiale Abstand des spiralförmigen Schlitzes 55 ändert, an die betreffende Kupplungshälfte herangezogen. Ein Ausweichen in einer Bewegungsrichtung parallel zu der Vorderseite 4, wird durch die Zentrierzapfen 40 verhindert, die in die korrespondierenden Bohrungen 36 und 37 der anderen Kupplungshälfte 2 eingreifen. Es ist ohne weiteres klar, dass die Zentrierzapfen 40 an jeder beliebigen Kupplungshälfte 2a, 2b vorgesehen sein können.

Die Zentrierzapfen 40 erzwingen eine Linearbewegung rechtwinklig zu der Vorderseite 4 der beiden Kupplungshälften 2a und 2b.

Bei der aufeinander zu gerichteten Bewegung der beiden Kupplungshälfte 2a und 2b dringt der Steckerabschnitt 75 in den Ringspalt ein, der zwischen der Außenseite des rohrförmigen Ventilverschlussglieds 103 und der Bohrung der Vorschraubhülse 94 besteht. Gleichzeitig wird entsprechend die Füllhülse 106 zurückgedrängt, die lediglich die Aufgabe hat im entkuppelten Zustand das Eindringen von Schmutz zu verhindern. Sobald der Stecker tief genug eingedrungen ist und der erste O-Ring 77 in dem Steckerhülse 75 auf der Außenfläche des rohrfömigen Ventilverschlussgliedes 103 abdichten kann, wird durch die weitere Bewegung mit Hilfe des Stößels 99 das Ventilverschlussglied 78 in das betreffende Modul 2a zurückbewegt.

Während des Eindringens des hülsenförmigen Ventilverschlussglieds 103 wird bereits das T-förmige Ventilverschlussglied 77 ein Stück zurückbewegt und kommt von dem rechten der beiden O-Ringe 77 frei, damit das rohrförmige Ventilverschlussglied 103 des Buchsenteils hier abdichten kann, noch ehe das T-förmige Ventilverschlussglied 77 die Strömungsverbindung freigibt. Bei noch weiterer Bewegung wird schließlich durch den Stößel 99 das Ventilverschlussglied 78 soweit zurück gestoßen, dass es auch von dem linken O-Ring 77 freikommt, so dass nun eine strömungsmäßige Verbindung an dem kolbenförmigen Abschnitt 79 vorbei in den Buchsenabschnitt stattfinden kann.

Bei der Bewegung wurde gleichzeitig das rohrförmige Ventilverschlussglied 103 soweit zurückbewegt, dass die Strömungsverbindung an dem O-Ring 106 vorbei möglich ist.

Die beiden Kupplungshälften 2a und 2b sind damit strömungsmäßig verbunden.

Wie sich aufgrund der Darstellung unschwer ergibt ist es auch möglich, in einem oder in mehreren Modulen in den Aufnahmebohrungen 14 und 15 gegebenfalls elektrische Stecker unterzubringen, damit parallel zu den Fluidverbindungen, auch elektrische Verbindungen hergestellt werden können. Die hierfür erforderlichen Stecker sind handelsüblich und brauchen im Einzelnen nicht dargestellt zu werden.

Ein Modul für den modularen Aufbau von Kupplungshälften von Mehrfachfluidverbindungen weist einen Grundkörper auf, der wenigstens zwei Aufnahmebohrungen für Buchsen- oder Steckerteile enthält. An den Seitenflächen, die bei modularem Aufbau aneinander zu liegen kommen, sind Nuten bzw. Passfedern ausgebildet, die beim Anreihen miteinander in Eingriff kommen und für eine lagerichtige Positionierung sorgen. Befestigungsmittel halten die Module aneinander.

## Patentansprüche

1. Modul (1) zum Aufbau modularer Fluidkupplungen, bei denen zwei Kupplungshälften (2) miteinander kuppelbar sind,
mit einer Grundplatte (3), die zwei zueinander parallele Seitenflächen (6,7), eine Rückseite (11) und eine Vorderseite (4) aufweist, die im gekuppelten Zustand der anderen Kupplungshälfte (2) gegenüber liegt,
mit einer Nut (25), die in einer der Seitenflächen (7) enthalten ist,
mit einer Passfeder (20), die der anderen Seitenfläche 6() zugeordnet ist und die spielarm in die Nut (25) eines angereihten Moduls (1) passt,
mit wenigsten zwei in der Grundplatte (3) enthaltenen Aufnahmebohrungen (14,15), deren Achse auf der durch die Vorderseite (4) definierten Ebene senkrecht steht, und
mit einer Querbohrung (31), die durch die Grundplatte (3) mittig zwischen den beiden Aufnahmebohrungen (14,15) hindurchführt und als Lagerung für ein Spannmittel (47,50) dient, mit dem zwei Kupplungshälften (2) zusammen zu spannen sind.

2. Modul nach Anspruch 1, **dadurch gekennzeichnet, dass** die Querbohrung (31) Teil eines Verbindungsmittels ist um zwei Module (2) Seitenfläche an Seitenfläche miteinander zu verbinden.

3. Modul nach Anspruch 1, **dadurch gekennzeichnet, dass** die Grundplatte (3) aus einem Gussmaterial besteht.

4. Modul nach Anspruch 1, **dadurch gekennzeichnet, dass** das die Grundplatte (3) aus einem Abschnitt von Aluminiumstrangguss, aus Aluminiumdruckguss oder Edelstahlfeinguss besteht.

5. Modul nach Anspruch 1, **dadurch gekennzeichnet, dass** die Vorderseite (4) eine im wesentlichen ebene Fläche ist.

6. Modul nach Anspruch 1, **dadurch gekennzeichnet, dass** die Nut (25) eine im Querschnitt rechteckige oder trapezförmige Nut ist.

7. Modul nach Anspruch 6, **dadurch gekennzeichnet, dass** die Nut (25), zumindest angenähert, mittig zwischen den Aufnahmebohrungen (14,15) liegt.

8. Modul nach Anspruch 6, **dadurch gekennzeichnet, dass** sich die Nut (25) durch einen Fortsatz (30) erstreckt, in dem sich die Seitenfläche (7) von der Vorderseite (4) weg verlängert.

9. Modul nach Anspruch 8, **dadurch gekennzeichnet, dass** der Fortsatz (30) lediglich eine Bohrung (32) enthält, die aus der Sicht der Vorderseite (2) hinter der Querbohrung (31) liegt.

10. Modul nach Anspruch 6, **dadurch gekennzeichnet, dass** die Längsachse der Nut (25) rechtwinkelig zu der durch die Vorderseite (4) definierte Ebene verläuft.

11. Modul nach Anspruch 1, **dadurch gekennzeichnet, dass** die Passfeder (20) in einer Nut liegt.

12. Modul nach Anspruch 1, **dadurch gekennzeichnet, dass** die Passfeder (20) einstückiger Bestandteil der Grundplatte (3) ist.

13. Modul nach Anspruch 1, **dadurch gekennzeichnet, dass** die Querbohrung (31) die Passfeder (20) schneidet.

14. Modul nach Anspruch 1, **dadurch gekennzeichnet, dass** der Durchmesser der Querbohrung (31) größer oder kleiner als die Weite der Nut (25) ist.

15. Modul nach Anspruch 1, **dadurch gekennzeichnet, dass** die Seitenflächen (6,7) neben der Nut (25) und neben der Passfeder (20) ebenen Flächen sind.

16. Modul nach Anspruch 1, **dadurch gekennzeichnet, dass** die Aufnahmebohrungen (14,15) in Fortsätzen (12,13) enthalten sind, die von der Rückseite (11) der Grundplatte (4) wegstehen.

17. Modul nach Anspruch 1, **dadurch gekennzeichnet, dass** zwischen den Fortsätzen (20,30) der Seitenflächen (6,7) und den Fortsätzen (12,13) mit den Aufnahmebohrungen (14,15) freier Raum vorhanden ist.

18. Modul nach Anspruch 1, **dadurch gekennzeichnet, dass** die beiden Fortsätze (20,30) der Seitenflächen (6,7) untereinander über eine Rippe (33) einstückig verbunden sind und dass durch die Rippe (33) eine Zusatzquerbohrung (29,32) verläuft.

19. Modul nach Anspruch 1, **dadurch gekennzeichnet, dass** in der Aufnahmebohrung (14,15) ein Ventil enthalten ist.

20. Modul nach Anspruch 1, **dadurch gekennzeichnet, dass** der Grundplatte (3) Zentriermittel (36,37,40) unbeweglich zugeordnet sind.

21. Modul nach Anspruch 1, **dadurch gekennzeichnet, dass** die Fortsätze (12,13) mit den Aufnahmebohrungen (14,15) über Strebfeiler (18) auf der Rückseite (11) der Grundplatte (3) abgestützt sind.

22. Modul nach Anspruch 1, **dadurch gekennzeichnet, dass** das Grundkörper (3) für ein Modul (1) für einen Steckerteil mit einem Grundkörper für ein Modul (1) für einen Buchsenteil identisch ist.

23. Kupplungshälfte (2) aus wenigsten zwei Modulen (1) nach einem oder einer Kombination der vorhergehenden. Ansprüche,
mit einer Hülse (62), die durch die die Querbohrung (31) führt und die dazu eingerichtet ist, die Module (1) Seitenfläche an Seitenfläche gegeneinander zu pressen,
mit einer Achse (51), die durch die Hülse (62) führt und die in der Hülse (62) drehbar gelagert ist, und
mit Betätigungshaken (53), die drehfest auf der Achse (51) gehaltert sind und von denen jeder eine spiralige Nut (55) enthält.

24. Kupplungshälfte (2) aus wenigsten zwei Modulen (1) nach einem oder einer Kombination der vorhergehenden Ansprüche,
mit einer Stange (47), die durch die die Querbohrung (31) führt, und
mit Zapfen (48), die an beiden Enden der Stange (47) in axialer Richtung überstehen um Widerlager für die Betätigungshaken (53) der anderen Kupplungshälfte (2) zu bilden.

25. Modul nach Anspruch 24, **dadurch gekennzeichnet, dass** die Zapfen (48) gehärtet sind.

26. Modul nach Anspruch 24, **dadurch gekennzeichnet, dass** auf den Zapfen gehärtete Rollen (48) drehbar gelagert sind.
